# EUROPEAN PATENT SPECIFICATION

(11) **EP 3 273 521 B1**
(45) Date of publication and mention of the grant of the patent: **18.11.2020**
(21) Application number: 16765161.1
(22) Date of filing: 17.02.2016
(51) Int. Cl.: H01M 10/42, H01M 2/02

(54) **STEPPED BATTERY**
GESTUFTE BATTERIE
BATTERIE À ÉTAGES

(30) Priority: 16.03.2015 KR 20150036110
(43) Date of publication of application: 24.01.2018
(73) Proprietor: LG Chem, Ltd., Yeongdeungpo-gu Seoul 07336 (KR)
(72) Inventor: BIN, Seung Seok, Daejeon 34122 (KR); KIM, Ki Woong, Daejeon 34122 (KR); YOON, Sung Han, Daejeon 34122 (KR); LEE, Seong Hwan, Daejeon 34122 (KR)
(74) Representative: Plasseraud IP
(86) International application number: PCT/KR2016/001621
(87) International publication number: WO 2016/148405

(56) References cited:
- WO-A1-2014/126369
- KR-A- 20120 100 195
- KR-A- 20130 021 354
- KR-A- 20150 007 971
- KR-B1- 101 405 012
- KR-B1- 101 414 092
- US-A1- 2011 183 169
- US-A1- 2011 183 183
- US-A1- 2013 236 768
- US-A1- 2014 065 448
- US-A1- 2014 220 418
- US-A1- 2015 072 202

## Description

### TECHNICAL FIELD

The present invention relates to a stepped battery, and more particularly to, a stepped battery capable of increasing utilization of an inner space of a system.

### BACKGROUND ART

The present application claims the benefit of the priority of Korean Patent Application No. 10-2015-0036110, filed on March 16, 2015.

As various electronic products have recently been diversified in shape, miniaturized, and slimmed, conventional batteries having a rectangular parallelepiped shape have been unable to efficiently utilize the inner space of the electronic products, which have various shapes and are miniaturized and slimmed.

Hence, the batteries are being manufactured in various shapes out of the rectangular parallelepiped shape to match a shape of the inner space of the electronic products, in which the batteries are accommodated, and a stepped battery is provided as one of these.

An example of the stepped battery is described in detail in a prior art document which is the Korean Patent Publication No. 10-2015-0007971.

However, there is a limitation in a stepped battery according to the related art that the shape thereof is not optimally implemented to match various shapes of the inner space within a system.

In addition, there are many cases in which a protection circuit module (PCM) or other circuit board has be essentially has to be used. Here, since a separate space is required for locating the PCM or other circuit board, it may be difficult to effectively locate the PCB or other circuit board in the limited space.
US 2013/236768 A1 discloses a battery pack including secondary batteries having different sizes, which are stacked to form a stair-like structure having a width and a height. US 2015/072202 A1 discloses a battery comprising a plurality of cells stacked in a step configuration, electrode tabs of the same polarity of the cells being electrically connected together.
US 2011/183183 A1 discloses an electronic device comprising a stacked array of a plurality of thin film batteries electrically connected together, the stacked array being in a staggered configuration. The outermost points of side edges on one side of the stacked array conform to an interior surface of the device in order to save space in the device.

### DISCLOSURE OF THE INVENTION

### TECHNICAL PROBLEM

Accordingly, to solve the foregoing limitation, an object of the present invention is to provide a stepped battery capable of maximizing utilization of an inner space of a system and implementing an optimized battery shape.

### TECHNICAL SOLUTION

According an aspect of the present invention, there is provided a stepped battery including a first cell and a plurality of second cells, which are stacked on one surface of the first cell and each of which has a width less than that of the first cell, wherein the second cells are disposed to be spaced apart from each other by a spaced space in which is disposed a protection circuit module (PCM) or a circuit board.

### ADVANTAGEOUS EFFECTS

The stepped battery according to the present invention includes the first cell and the plurality of second cells, which are stacked on the one surface of the first cell and each of which has the width less than that of the first cell. Here, the second cells are disposed to be spaced apart from each by a spaced space in which is disposed a protection circuit module (PCM) or a circuit board. Therefore, the inner space of the system may be maximized in utilization to implement the optimized battery shape.

### BRIEF DESCRIPTION OF THE DRAWINGS

FIG. 1 is a perspective view of a stepped battery according to Embodiment 1 not according to the present invention.
FIG. 2 is a front view of the stepped battery according to Embodiment 1 not according to the present invention.
FIG. 3 is a side view of the stepped battery according to Embodiment 1 not according to the present invention.
FIG. 4 is a front view of a stepped battery according to Embodiment 2 of the present invention.
FIG. 5 is a front view of a stepped battery according to Embodiment 3 of the present invention.
FIG. 6 is a plane view of the stepped battery according to Embodiment 3 of the present invention.

### MODE FOR CARRYING OUT THE INVENTION

Hereinafter, preferred embodiments of the present invention will be described in more detail with reference to the accompanying drawings. However, the present invention is not restricted or limited to Embodiments below. The scope of protection is defined by the appended claims. Features describing details of further embodiments are defined in the dependent claims. Subject matter not covered by the claims is not according to the invention.

### Embodiment 1 - not according to the invention

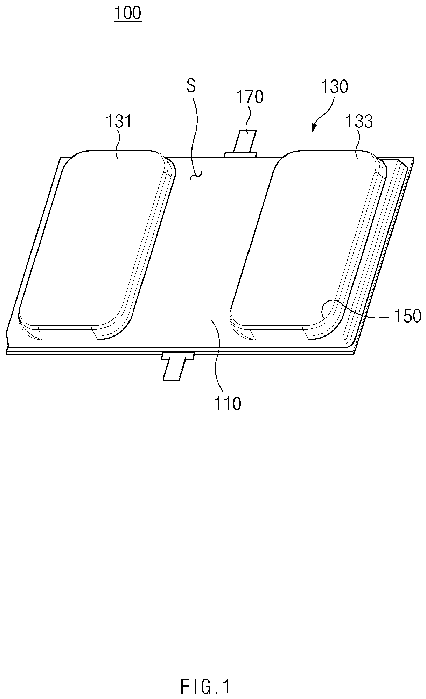

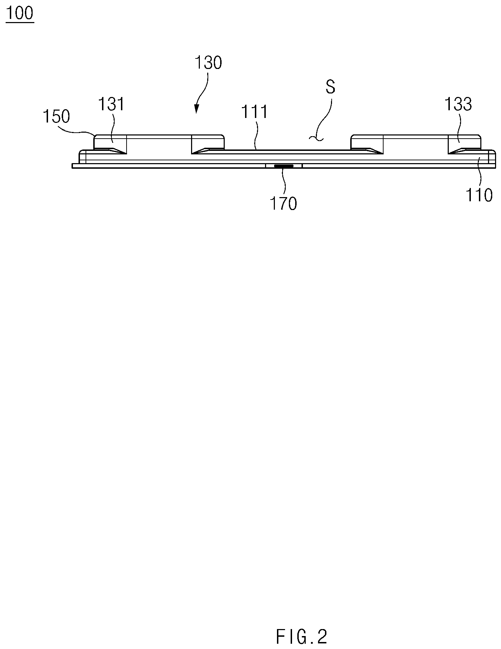

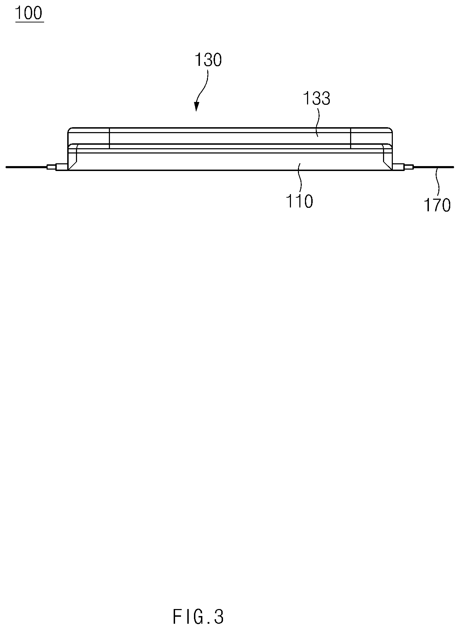

FIG. 1 is a perspective view of a stepped battery according to Embodiment 1 - not according to the invention. FIG. 2 is a front view of the stepped battery according Embodiment 1 - not according to the invention. FIG. 3 is a side view of a stepped battery according to Embodiment 1 - not according to the invention.

Hereinafter, a stepped battery according to Embodiment 1 - not according to the invention-will be described with reference to FIGS. 1 to 3.

A stepped battery 100 according to Embodiment 1 - not according to the invention-includes a first cell 110 and a second cell 130.

The first cell 110 is a cell constituting a base. Also, the first cell 110 is a cell that is disposed under the second cell 130 that will be described below.

The second cell 130 has a width less than that of the first cell 110 and is stacked on one surface 111 of the first cell 110. The second cell 130 includes a plurality of second cells 130 disposed on the one surface 111 of the first cell 110.

FIGS. 1 to 3 illustrate two second cells 130 disposed on the one surface 111 of the first cell, i.e., a top surface of the first cell 110. For convenience, the second cell that is disposed at a left side in FIG. 2 may be called a left second cell 131, and the second cell that is disposed at a right side in FIG. 2 may be called a right second cell 133.

In the stepped battery 100 according to Embodiment 1 - not according to the invention -, the second cells 130 are disposed to be spaced apart from each other on the one surface 111 of the first cell 110. Referring to FIG. 2, the second cell 130 includes the left second cell 131 and the right second cell 133, which are disposed to be horizontally spaced apart from each other.

A spaced space is defined between the second cells 130 disposed to be spaced from each other. In FIGS. 1 and 2, the spaced space S defined between the left second cell 131 and the right second cell 133 is illustrated.

In the stepped battery 100 according Embodiment 1 - not according to the invention, the second cells 130 are disposed to be spaced apart from each other as illustrated above, an inner space of a system is maximized in utilization.

For example, when the stepped battery 100 is inserted into the system including a protrusion (not shown) protruding towards the inside of the central portion of the stepped battery 100, the protrusion may be accommodated in the spaced space S of the stepped battery 100 according to Embodiment 1 - not according to the invention. Thus, the inner space of the system may be maximally utilized without having a surplus space to maximize the utilization of the inner space.

Referring to FIGS. 1 and 2, at least one edge of the first cell 110 or the second cell 130 may be rounded. When the edge 150 is rounded as described above, internal structures of the system may be more protected.

If the edge 150 is sharp, the internal components of the system may be damaged or scratched. Also, the sharp edge may cause injury to a person that handles the battery 100 or may damage the treatment device.

In the stepped battery 100 according to Embodiment 1 - not according to the invention, the plurality of second cells may have the same size and weight as each other. In this case, since pressures applied to the different portions (the left and right portions) of the first cell 110 are the same, the stepped battery 100 may be balanced.

That is, if the pressures applied to the left and right portions of the first cell 110 are different from each other because the second cells 131 and 133 have sizes and weights different from each other, the balance of force is lost to cause abnormality of the first cell 110.

Also, if the internal components of the cell move from a side to which a large pressure is applied to a side to which a small pressure is applied, an abnormal operation of the battery may occur.

### Embodiment 2

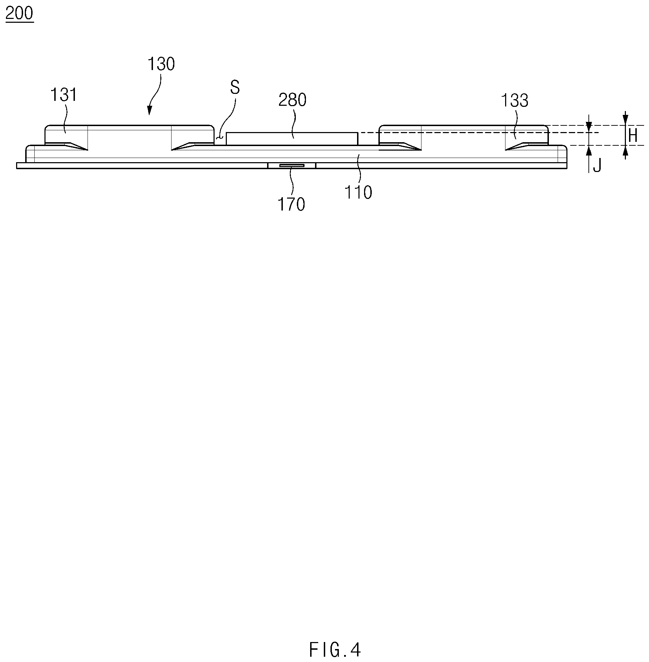

FIG. 4 is a front view of a stepped battery according to Embodiment 2 of the present invention.

The stepped battery according to Embodiment 2 of the present invention has a configuration similar to that of the stepped battery according to Embodiment 1 - not according to the invention-described above except that a protection circuit module is further provided.

For reference, the same (or corresponding) reference numeral will be given to the same (or corresponding) components as those described above, and thus duplicated descriptions thereof will be omitted.

Hereinafter, a stepped battery according to Embodiment 2 will be described with reference to FIG. 4.

As illustrated in FIG. 4, a stepped battery 200 according to Embodiment 2 of the present invention includes a protection circuit module 280 in a spaced space S thereof. Here, a constituent disposed in the spaced space S is not limited to the protection circuit module 280. Alternatively, other circuit board may be disposed in the spaced space S.

Since the protection circuit module 280 disposed in the spaced space S is mounted on the battery without occupying a separate space in the system into which the stepped battery 200 is inserted, an inner space of the system is minimized and thus more effectively utilized.

Also, in the stepped battery 200 according to Embodiment 2, the protection circuit module 280 may have a height J equal to or less than a stepped height H of a second cell 130. That is, the second cell 130 may have the height H equal to or greater than that J of the protection circuit module 280. When the protection circuit module 280 is provided as described above, the protection circuit module 280 may be protected against an external object.

This is a similar principle as if a soldier hiding in a trench can be protected against flying bullets during the war. Since the protection circuit module 280 is disposed in the spaced space S that is recessed between left and right second cells 131 and 133, the protection circuit module 280 may be protected against the external object.

### [Embodiment 3]

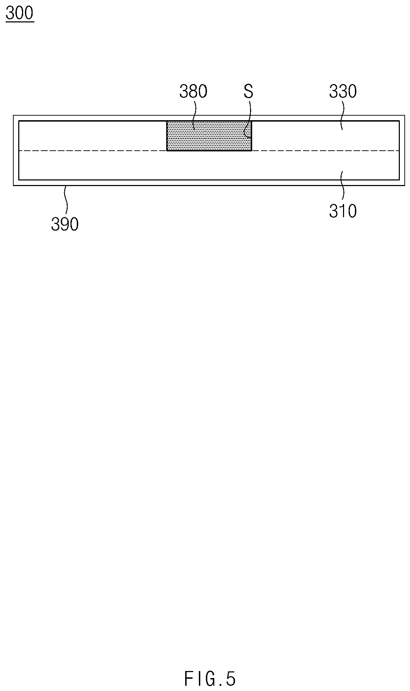

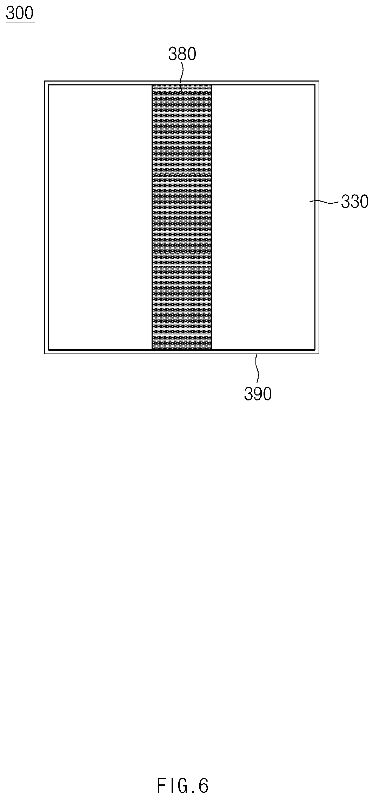

FIG. 5 is a front view of a stepped battery according to Embodiment 3 of the present invention. FIG. 6 is a plane view of the stepped battery according to Embodiment 3 of the present invention.

The stepped battery according to Embodiment 3 of the present invention has a configuration similar to that of the stepped battery according to Embodiment 1 - not according to the invention-described above except that a protection circuit module is further provided.

For reference, the same (or corresponding) reference numeral will be given to the same (or corresponding) components as those described above, and thus duplicate descriptions thereof will be omitted.

Hereinafter, a stepped battery according to Embodiment 3 will be described with reference to FIGS. 5 and 6.

As illustrated in FIGS. 5 and 6, a stepped battery 300 according to Embodiment 3 of the present invention includes a circuit board 380 disposed in a spaced space S thereof. Here, a constituent disposed in the spaced space S is not limited to the circuit board 380. Alternatively, a protection circuit module or the like may be disposed in the spaced space S.

The circuit board 380 may have a size corresponding to that of the spaced space S. Particularly, as illustrated in FIGS. 5 and 6, the circuit board 380 may have a size that matches that of the spaced space S. In this case, the circuit board 380 may not be separated from the stepped battery 300 by friction therebetween even without having a separate fixing device for fixing the circuit board 380. In this manner, the stepped battery 300 may be integrated.

Also, when the circuit board 380 is mounted to fill the spaced space S, an outer case 390 may be maintained in a flat shape without being waved or stepped to realize the battery that is more improved in terms of an outer appearance and practicability thereof.

## Claims

1. A stepped battery (100, 200, 300) comprising:
a first cell (110) having one top surface (111); and
a plurality of second cells (130, 131 and 133) stacked on the one top surface (111) of the first cell (110) , and each of which has a width less than that of the first cell (110),
wherein the second cells (130, 131 and 133) are disposed on the one top surface to be horizontally spaced apart from each other by a spaced space (S) in which is disposed a protection circuit module (PCM) or a circuit board (380)).

2. The stepped battery (100, 200, 300) of claim 1, wherein the plurality of second cells (130, 131 and 133) have the same size and weight as each other.

3. The stepped battery (100, 200, 300) of claim 1, wherein the first cell (110) or the second cells (130, 131, 133) have a rounded edge (150).

4. The stepped battery (200, 300) of claim 1, wherein the second cell (130, 131, 133) has a height (H) equal to or greater than that (J) of the protection circuit module or the circuit board (280).

5. The stepped battery (300) of claim 4, wherein the protection circuit module or the circuit board (380) has a size corresponding to that of the spaced space (S).

6. The stepped battery (300) of claim 5, wherein the second cells (330) have a height (H) equal to the height (J) of the protection circuit module or the circuit board (380),
and wherein the stepped battery has an outer case (390) for the first cell (310), the second cells (330) and the protection circuit module (PCM) or the circuit board (380) which fills the spaced space (S), the outer case having a flat shape without being waved or stepped.

## Patentansprüche

1. Gestufte Batterie (100, 200, 300), umfassend:
eine erste Zelle (110), welche eine obere Fläche (111) aufweist; und
eine Mehrzahl zweiter Zellen (130, 131 und 133), welche an der einen oberen Fläche (111) der ersten Zelle (110) gestapelt sind und von welchen jede eine Breite aufweist, welche geringer als diejenige der ersten Zelle (110) ist,
wobei die zweiten Zellen (130, 131 und 133) derart an der einen oberen Fläche angeordnet sind, dass sie horizontal um einen Abstandsraum (S) voneinander beabstandet sind, in welchem ein Schutzschaltungsmodul (PCM) oder eine Leiterplatte (380) angeordnet ist.

2. Gestufte Batterie (100, 200, 300) nach Anspruch 1, wobei die Mehrzahl zweiter Zellen (130, 131 und 133) die gleiche Größe und das gleiche Gewicht wie jede andere aufweisen.

3. Gestufte Batterie (100, 200, 300) nach Anspruch 1, wobei die erste Zelle (110) oder die zweiten Zellen (130, 131, 133) einen abgerundeten Rand (150) aufweist/aufweisen.

4. Gestufte Batterie (200, 300) nach Anspruch 1, wobei die zweite Zelle (130, 131, 133) eine Höhe (H) aufweist, welche größer oder gleich als diejenige (J) des Schutzschaltungsmoduls oder der Leiterplatte (280) ist.

5. Gestufte Batterie (200, 300) nach Anspruch 4, wobei das Schutzschaltungsmodul oder die Leiterplatte (380) eine Größe aufweist, welche derjenigen des Abstandsraums (S) entspricht.

6. Gestufte Batterie (300) nach Anspruch 5, wobei die zweiten Zellen (330) eine Höhe (H) aufweisen, welche zu der Höhe (J) des Schutzschaltungsmoduls oder der Leiterplatte (380) gleich ist, und wobei die gestufte Batterie ein äußeres Gehäuse (390) für die erste Zelle (310), die zweiten Zellen (330) und das Schutzschaltungsmodul (PCM) oder die Leiterplatte (380) aufweist, welches den Abstandsraum (S) füllt, wobei das äußere Gehäuse eine ebene Form aufweist, ohne gewellt oder gestuft zu sein.

## Revendications

1. Batterie en étages (100, 200, 300) comprenant :
une première cellule (110) ayant une surface supérieure (111) ; et
une pluralité de secondes cellules (130, 131 et 133) empilées sur ladite surface supérieure (111) de la première cellule (110), et dont chacune a une largeur inférieure à celle de la première cellule (110),
dans laquelle les secondes cellules (130, 131 et 133) sont disposées sur ladite surface supérieure pour être espacées horizontalement les unes des autres par un espace espacé (S) dans lequel un module de circuit de protection (PCM) ou une carte de circuit imprimé (380) est disposé(e).

2. Batterie en étages (100, 200, 300) selon la revendication 1, dans laquelle la pluralité de secondes cellules (130, 131 et 133) ont la même taille et le même poids les unes que les autres.

3. Batterie en étages (100, 200, 300) selon la revendication 1, dans laquelle la première cellule (110) ou les secondes cellules (130, 131, 133) ont un bord arrondi (150).

4. Batterie en étages (200, 300) selon la revendication 1, dans laquelle la seconde cellule (130, 131, 133) a une hauteur (H) supérieure ou égale à celle (J) du module de circuit de protection ou de la carte de circuit imprimé (280).

5. Batterie en étages (300) selon la revendication 4, dans laquelle le module de circuit de protection ou la carte de circuit imprimé (380) a une taille correspondant à celle de l'espace espacé (S).

6. Batterie en étages (300) selon la revendication 5, dans laquelle les secondes cellules (330) ont une hauteur (H) égale à la hauteur (J) du module de circuit de protection ou de la carte de circuit imprimé (380),
et dans laquelle la batterie en étages a un carter extérieur (390) pour la première cellule (310), les secondes cellules (330) et le module de circuit de protection (PCM) ou la carte de circuit imprimé (380) qui remplit l'espace espacé (S), le carter extérieur ayant une forme plate sans qu'elle soit ondulée ou en étages.
